# EUROPÄISCHE PATENTSCHRIFT

(11) **EP 2 292 448 B1**
(45) Veröffentlichungstag und Bekanntmachung des Hinweises auf die Patenterteilung: **04.07.2012**
(21) Anmeldenummer: 09169199.8
(22) Anmeldetag: 02.09.2009
(51) Int. Cl.: B60C 11/04

(54) **Fahrzeugluftreifen für Nutzfahrzeuge**
Vehicle tyres for commercial vehicles
Pneu de véhicule pour véhicules utilitaires

(43) Veröffentlichungstag der Anmeldung: 09.03.2011
(73) Patentinhaber: Continental Reifen Deutschland GmbH, 30165 Hannover (DE)
(72) Erfinder: Kleffmann, Jens, 30167, Hannover (DE); Peters, Klaus, 31303, Burgdorf (DE); Buchinger-Barnstorf, Thomas, 30974, Wennigsen (DE)
(74) Vertreter: Finger, Karsten

(56) Entgegenhaltungen:
- EP-A- 2 100 752
- US-A1- 2006 005 904

## Beschreibung

Die Erfindung betrifft einen Fahrzeugluftreifen für Nutzfahrzeuge mit einem Laufstreifen mit zumindest drei in Umfangsrichtung verlaufenden Umfangsrillen, welche den Laufstreifen in Umfangsrippen gliedern, wobei eine parallel zur Laufstreifenperipherie im Laufstreifen verlaufende, die tiefste(n) Umfangsrille(n) von radial innen berührende Einhüllende gemeinsam mit der Laufstreifenperipherie und schulterseitigen Flankenabschnitten ein Laufstreifen-Bruttovolumen definiert und sämtliche Rillen im Laufstreifen ein Rillenvolumen definieren.

Ein Reifen der eingangs genannten Art ist beispielsweise aus der US 5,535,798 B bekannt. Um einen gleichförmigen Abrieb des Laufstreifens zu erreichen, ist dieser durch vier in Umfangsrichtung umlaufende breite Umfangsrillen in Umfangsrippen gegliedert, wobei in den beiden schulterseitigen Umfangsrippen nahe der Laufstreifenränder jeweils eine weitere schmale und in Umfangsrichtung umlaufende Umfangsrille vorgesehen ist. Die breiten Umfangsrillen sind durch Nutflankenflächen begrenzt, welche mit Vertiefungen versehen sind, die das Negativ dreiseitiger Pyramiden sind, deren Spitzen der Laufstreifenperipherie zugewandt sind.

Aus der US 2006/0005904 A1 ist ein Fahrzeugluftreifen für Nutzfahrzeuge bekannt, welcher einen bezüglich der Äquatorebene des Reifens asymmetrisch ausgeführten Laufstreifen mit zwei oder drei breiten Umfangsrillen aufweist. Die Schulterrippen des Laufstreifens sind unterschiedlich breit ausgeführt, wobei die breitere Schulterrippe eine gerundete Außenkontur und die schmälere Schulterrippe eine flache Außenkontur aufweist. Der Reifen ist derart am Fahrzeug zu montieren, dass die Schulterrippe mit der runden Kontur an der Frontachse außen und an der hinteren Achse innen liegt. Aus der EP 2100 752 B1, welche ein Stand der Technik gemäß Artikel 54 (3) EPÜ ist, ist ein Laufstreifen für einen Lastkraftwagenreifen mit zwei Umfangsrillen bekannt.

Um den Rollwiderstand von Fahrzeugluftreifen zu senken, ist bereits eine Vielzahl von Maßnahmen vorgeschlagen worden, beispielsweise eine Reduktion der Profiltiefe oder eine Verringerung der Laufstreifenbreite. Diese Maßnahmen zielen darauf ab, das beim Abrollen zu deformierende Gummivolumen zu reduzieren. Darüber hinaus verringern spezielle Laufstreifencompounds den Rollwiderstand, beispielsweise solche, die einen geringen Füllstoffanteil aufweisen. Eine Vielzahl von veröffentlichten Patentanmeldungen und Patenten befasst sich mit dem Thema, den Rollwiderstand von Nutzfahrzeugreifen zu senken, um den Kraftstoffverbrauch eines Fahrzeuges zu reduzieren. So ist beispielsweise aus der EP 0 973 652 B1 ein Reifen für LKW-Antriebsräder bekannt, dessen Laufstreifen zur Verringerung des Rollwiderstandes in Blöcke gegliedert ist, welche von Schlitzen axial durchsetzt sind. Die Blöcke sind ferner durch Quernuten voneinander getrennt, welche jeweils mit weiteren Schlitzen versehen sind. Darüber hinaus ist eine Vielzahl von Längsschlitzen vorgesehen.

Die üblichen Reifen für Nutzfahrzeuge mit Laufstreifen mit Umfangsrippen und Umfangsrillen weisen ein Rillenvolumen auf, welches mindestens 12% des eingangs definierten Bruttovolumens des Laufstreifens beträgt. Eine Erhöhung des Gummivolumens des Laufstreifens zu Lasten des Rillenvolumens würde lediglich eine Erhöhung der Lebensdauer des Reifens erwarten lassen.

Der Erfindung liegt die Aufgabe zugrunde, den Rollwiderstand eines Nutzfahrzeugreifens wirkungsvoll durch einfache Maßnahmen zu senken, ohne dass negative Auswirkungen auf andere Laufstreifeneigenschaften sowie den Abrieb und die Lebenserwartung des Reifens zu erwarten sind.

Gelöst wird die gestellte Aufgabe erfindungsgemäß dadurch, dass das Rillenvolumen im Laufstreifen zwischen 1% und 10% des Bruttovolumens beträgt.

Bei der Erfindung wird daher entgegen der bisherigen Meinung der Fachwelt überraschenderweise durch eine Erhöhung des Gummivolumens im Laufstreifen der Rollwiderstand merklich reduziert. Es hat sich herausgestellt, dass sich bei einem Rillenvolumen von bis zu 10% des Bruttovolumens die Profilsteifigkeit in radialer Richtung derart erhöht, dass die Deformationsamplitude des Laufstreifens in einem Ausmaß reduziert wird, welches eine Überkompensation des zu erwartenden Effektes - Verschlechterung des Rollwiderstandes durch mehr vorhandenen Gummi -bewirkt. Der Rollwiderstand des Reifens ist somit geringer, wobei die gegenüber einem nach dem Stand der Technik ausgeführten Reifen erzielbare Reduktion des Rollwiderstandes signifikant sein kann, je nach dem Anteil des Rillenvolumens.

Nachdem der Anteil des Rillenvolumens mit der erzielbaren Reduktion des Rollwiderstandes des Reifens korreliert, ist es gemäß einer bevorzugten Ausführungsform der Erfindung besonders vorteilhaft, wenn der Anteil des Rillenvolumens am Bruttovolumen bis zu 7% beträgt.

Besonders signifikant ist die Reduktion des Rollwiderstandes bei Ausführungen, bei welchen der Anteil des Rillenvolumens am Bruttovolumen bis zu 4% beträgt.

Vor allem die Ausführung der Umfangsrillen und deren Anzahl beeinflusst die Größe des Rillenvolumens. Grundsätzlich kann im Rahmen der Erfindung im Laufstreifen zumindest eine breite Umfangsrille angeordnet sein, deren Breite an der Laufstreifenperipherie zwischen 5 mm und 20 mm und deren Tiefe zwischen 10 mm und 25 mm beträgt. Des Weiteren kann gemäß der Erfindung im Laufstreifen grundsätzlich zumindest eine schmale Umfangsrille vorgesehen sein, deren Breite an oder nahe der Laufstreifenperipherie zwischen 0,5 mm und 3 mm und deren Tiefe ebenfalls zwischen 10 mm und 25 mm beträgt.

Gemäß einer bevorzugten Ausführungsform der Erfindung sind im Laufstreifen bis zu sieben Umfangsrillen vorgesehen.

Sind im Laufstreifen als Umfangsrillen hauptsächlich oder ausschließlich schmale Umfangsrillen angeordnet, beträgt deren Anzahl bis zu sieben. Bei Ausführungen, welche als Umfangsrillen hauptsächlich oder ausschließlich breite Umfangsrillen aufweisen, beträgt deren Anzahl bis zu vier.

Ein erfindungsgemäß ausgeführter Reifen kann daher im Laufstreifen auch eine Kombination aus schmalen und breiten Umfangsrillen aufweisen, wobei die jeweilige Anzahl die Größe des Rillenvolumens beeinflusst.

Auch die gestalterische Ausführung der Umfangsrillen wirkt sich auf das Rillenvolumen bzw. den Anteil des Rillenvolumens am Bruttovolumen aus. Die gestalterische bzw. geometrische Ausführung der Umfangsrillen beeinflusst viele wichtige Laufstreifeneigenschaften, beispielsweise das Wasserdränagevermögen, das Abriebsverhalten, die Traktionseigenschaften, das Abrollgeräusch und dergleichen. Es ist daher wesentlich, die Umfangsrillen von ihrer Geometrie bzw. ihrem Querschnitt her derart auszuführen, dass sie einerseits den Anteil des Rillenvolumens am Bruttovolumen erfindungsgemäß gering halten und andererseits die erwünschten Laufstreifeneigenschaften sicherstellen. In diesem Zusammenhang ist es gemäß der Erfindung von Vorteil, wenn die breite(n) Umfangsrille(n) Rillenflanken aufweist bzw. aufweisen, welche mit vorspringenden Gestaltungselementen, beispielsweise Erhebungen oder Schrägflächen, versehen sind. Bei schmalen Umfangsrillen sind insbesondere solche Ausführungen vorteilhaft, welche einen Rillenquerschnitt aufweisen, welcher sich von der Laufstreifenperipherie ausgehend in radialer Richtung verbreitert.

Breite Umfangsrillen, welche mit einem relativ geringen Rillenvolumen auslegbar sind, sind beispielsweise derart gestaltet, dass sie an der Laufstreifenperipherie jeweils von zwei parallel zueinander und geradlinig verlaufenden Randkanten begrenzt sind und einen in Umfangsrichtung zickzackförmig verlaufenden Rillengrund aufweisen.

Breite Umfangsrillen sind oft hinsichtlich des Verfangens von Steinen kritisch. Um ein Steinverfangen wirkungsvoll zu verhindern, ist bei einer bevorzugten Ausführungsform der Erfindung vorgesehen, dass den bezüglich der Randkanten einspringende Ecken des Rillengrundes jeweils die Spitze einer dreieckigen, zur radialen Richtung geneigten Fläche zugeordnet ist, deren eine Dreiecksseite entlang einer Randkante verläuft, wobei diese Flächen die Erhebungen begrenzen, welche von beiden Rillenflanken in die Umfangsrille ragen.

Auch die besondere Ausgestaltung der Erhebungen trägt dazu bei, dass sich keine Steine in den Umfangsrillen verklemmen, insbesondere ist es günstig, wenn die Erhebungen pyramidenartig gestaltet sind und die zur radialen Richtung geneigten dreieckigen Flächen jeweils eine Seitenfläche dieser Erhebungen sind, deren Spitzen sich in einem Abstand vom Rillengrund befinden, welcher mindestens 25 % der Tiefe der Umfangsrille beträgt, wobei an die von den Randkanten aus verlaufenden Flächen zwei weitere Pyramidenflächen anschließen, und wobei jeweils zwei dieser Flächen aus benachbarten Erhebungen eine gemeinsame, eine Knickkante bildende Seite besitzen, welche von der Randkante bis zum Rillengrund verläuft.

Eine besonders vorteilhafte, mit einem Rillenvolumen von insbesondere knapp unter 7% auslegbare Ausführungsvariante eines Laufstreifens weist zwei breite schulterseitig verlaufende Umfangsrillen und eine dritte breite Umfangsrille im zentralen Bereich auf, wobei je eine schmale Umfangsrille zwischen den breiten Umfangsrillen verläuft. Eine weitere Ausführungsform, die ein Rillenvolumen knapp unter 7% aufweisen kann, besitzt zwei breite schulterseitig verlaufende Umfangsrillen und zwischen diesen drei schmale Umfangsrillen.

Bei diesen und anderen Kombinationen von breiten und schmalen Umfangsrillen im Laufstreifen ist es günstig, wenn sämtliche Umfangsrillen übereinstimmende Tiefen aufweisen. Die schmalen Umfangsrillen sind dann auch bei abgefahrenem Laufstreifen wirksam.

Um das Rillenvolumen zu reduzieren, kann es günstig sein, die Umfangsrillen im Laufstreifen in unterschiedlichen Tiefen auszuführen.

Erfindungsgemäße Laufstreifen können in den Umfangsrippen Querrillen, Einschnitte und dergleichen aufweisen, deren "Luftvolumen" zum Rillenvolumen beiträgt.

Weitere Merkmale, Vorteile und Einzelheiten der Erfindung werden nun anhand der Zeichnung, die schematisch Ausführungsbeispiele darstellt, näher beschrieben. Dabei zeigen

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Ansicht einer Ausführungsform eines Laufstreifens,
Fig. 2 eine vergrößerte Ansicht einer Umfangsrille des in Fig. 1 gezeigten Laufstreifens,
Fig. 3 eine Schnittdarstellung entlang der Linie III-III der Fig. 2,
Fig. 4 eine Schnittdarstellung entlang der Linie IV-IV der Fig. 2,
Fig. 5 eine Ansicht einer weiteren Ausführungsform eines erfindungsgemäßen Laufstreifens,
Fig. 6 bis Fig. 10 Querschnitte unterschiedlicher Ausführungsvarianten von Umfangsrillen,
Fig. 11a und Fig. 11b Ansichten von weiteren Ausführungsformen eines erfindungsgemäß ausgeführten Laufstreifens und
Fig. 12 bis Fig. 38 schematische Draufsichten auf Umfangsabschnitte von Laufstreifen mit unterschiedlichen Ausführungsvarianten.

Die Erfindung befasst sich mit einer besonderen Ausführung von Laufstreifen für Nutzfahrzeugreifen, insbesondere LKW-, Bus- und Anhängerreifen. Erfindungsgemäß ausgeführte Reifen sind vorzugsweise für den Einsatz auf der Trailer- bzw. Nachlaufachse entsprechender Fahrzeuge konzipiert und können den üblichen Aufbau von Radialluftreifen für diese Einsatzzwecke aufweisen. Der Aufbau ist daher weder dargestellt noch beschrieben.

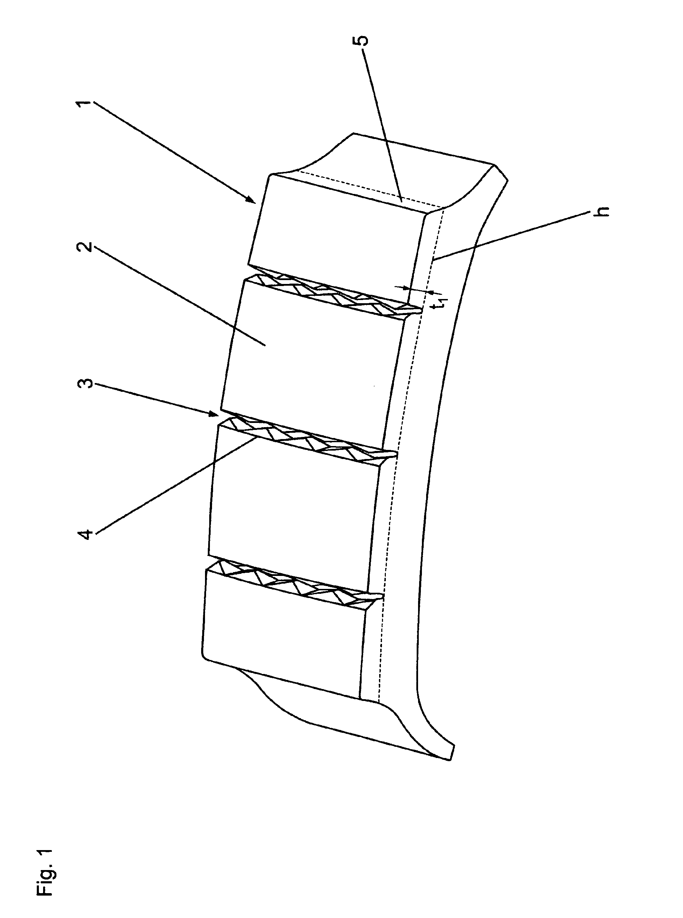

weisen an der Laufstreifenperipherie in Umfangsrichtung geradlinig und parallel zueinander verlaufende Randkanten 4 auf, deren gegenseitiger Abstand b₁ - dieser entspricht der Breite der Umfangsrillen 3 bei neuem Reifen - zwischen 5 mm und 20 mm gewählt wird. Die maximale Tiefe t₁ der breiten Umfangsrillen 3, die bei der gezeigten Ausführung für sämtliche Umfangsrillen 3 gleich groß gewählt ist, beträgt zwischen 10 mm und 25 mm. Parallel zur axialen Außenkontur der Laufstreifenperipherie ist in Fig. 1 eine Hilfslinie h eingezeichnet, welche die breiten Umfangsrillen 3 an ihren radial inneren Enden berührt und derart im Querschnitt eine parallel zur Laufstreifenperipherie in Umfangsrichtung innerhalb des Laufstreifens 1 umlaufende Einhüllende versinnbildlicht.

Die durch die Hilfslinie h versinnbildlichte Einhüllendende, die Laufstreifenperipherie und die schulterseitigen Flankenabschnitte 5 des Laufstreifens 1 umschließen ein Bruttovolumen V, welches die Summe des hier befmdlichen Gummivolumens und des Rillenvolumens V_{R} ist, welches seinerseits die Summe der "Luftvolumina" sämtlicher breiten Umfangsrillen 3 -zwischen den Rillenbegrenzungen und einer Einhüllenden der Laufstreifenperipherie ermittelt- ist. Bei einem erfindungsgemäß ausgeführten Reifen beträgt der Anteil des Rillenvolumens V_{R} am Bruttovolumen V zwischen 1 % und 10%, vorzugsweise maximal 7% und insbesondere zwischen 1 % und 4%. Ein erfindungsgemäß ausgeführter Reifen weist daher einen Laufstreifen mit einem geringen Rillenvolumen V_{R} auf.

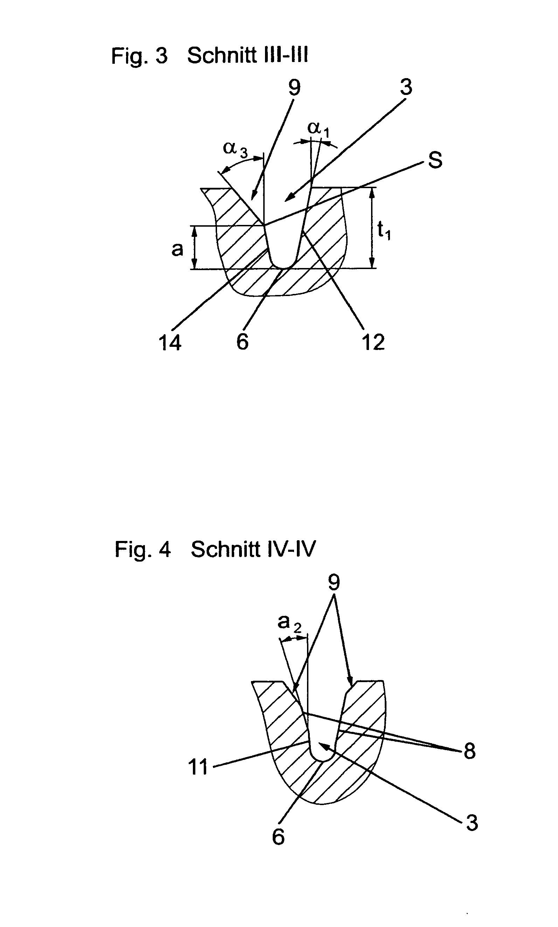

Fig. 1 bis Fig. 4 zeigen eine bevorzugte Ausführungsform einer breiten Umfangsrille 3 mit einem geringen Rillenvolumen durch eine besondere Ausgestaltung der Rillenflanken. Die breite Umfangsrille 3 weist einen Rillengrund 6 auf, welcher sich aus in Zickzackform verlaufenden Abschnitten 6a zusammensetzt und im Querschnitt (Fig. 3 und Fig. 4) leicht gerundet ausgeführt ist. Der Rillengrund 6 weist eine Breite zwischen 25% und 50% der Breite b₁ auf. Die einzelnen, gleich lang ausgeführten Abschnitte 6a des Rillengrundes 6 verlaufen unter einem kleinen, spitzen Winkel von bis zu 20° zur Umfangsrichtung. Die Zickzackform des Rillengrundes 6 korreliert mit der Ausgestaltung der beiden Flanken der Umfangsrille 3. An jeder Rillenflanke ist eine in Umfangsrichtung verlaufende Reihe von Erhebungen 7 ausgebildet, welche von den Nutflanken pyramidenartig abragen. Die Spitze S jeder Erhebung 7 ist einem einspringenden Eck 6b des Rillengrundes 6 zugeordnet. Hier treffen jeweils fünf dreieckige Flächen, zwei gleich große Flächen 8, eine Fläche 9 und zwei weitere, gleichgroße Flächen 11 zusammen. Die Fläche 9 ist die größte Fläche und ein gleichseitiges Dreieck, dessen Hypotenuse mit der betreffenden Randkante 4 zusammenfällt und unter einem Winkel α₃ zur radialen Richtung geneigt verläuft, der zwischen 15° und 45° beträgt.

An den in Richtung der Randkanten 4 vorspringenden Ecken 6c des Rillengrundes 6 erstrecken sich vom Rillengrund 6 zu den Randkanten 4 Knickkanten 12 unter einem Winkel α₁ von 2° bis 10° zur radialen Richtung. Die Knickkante 12 ist gleichzeitig eine gemeinsame Seite der zwei dreieckigen Flächen 8, die sich zu den Spitzen S und zu den in Umfangsrichtung benachbarten Erhebungen 7 erstrecken. Die Knickkanten 12 reichen bis zu den Ecken der Flächen 9 an den Randkanten 4, sodass jeweils zwei der dreieckigen Flächen 8 an der Spitze S einer Erhebung 7 zusammentreffen. Die Flächen 8 sind, im Querschnitt gemäß Fig. 4 betrachtet, gegenüber der radialen Richtung unter einem Winkel α₂ geneigt, welcher um mindestens 2° kleiner ist als der Winkel α₃ und insbesondere zwischen 10° und 35° beträgt. Von der Spitze S jeder Erhebung 7 erstreckt sich eine weitere Knickkante 14 unter dem Winkel α₁ zum einspringenden Eck 6b des Rillengrundes 6. Die Knickkante 14 ist gleichzeitig eine der Seitenkanten der beiden weiteren dreieckigen Flächen 11, welche unter dem Winkel α₁ zur radialen Richtung geneigt verlaufen und Verbindungsflächen zwischen den Flächen 8 und dem Rillengrund 6 sind.

Die beiden Rillenflanken der Umfangsrillen 3 sind auf übereinstimmende Weise mit Erhebungen 7 versehen, wobei jeweils eine Knickkante 12 an der einen Rillenflanke einer Knickkante 14 und einer Spitze S an der anderen Rillenflanke gegenüber liegt.

Der Abstand a der Spitzen S von der tiefsten Stelle des Rillengrundes 6 beträgt zwischen 25% und 80% der Tiefe t₁. Die Wellenlänge der Zickzackform des Rillengrundes 6 entspricht dem gegenseitigen Abstand zweier Spitzen S und beträgt zwischen 15 mm und 80mm.

Von besonderem Vorteil sind bei den in Fig. 1 bis 4 gezeigten breiten Umfangsrillen 3 das geringe Rillenvolumen und die spezielle Geometrie der Erhebungen 7, welche ein Steinverfangen wirkungsvoll verhindert.

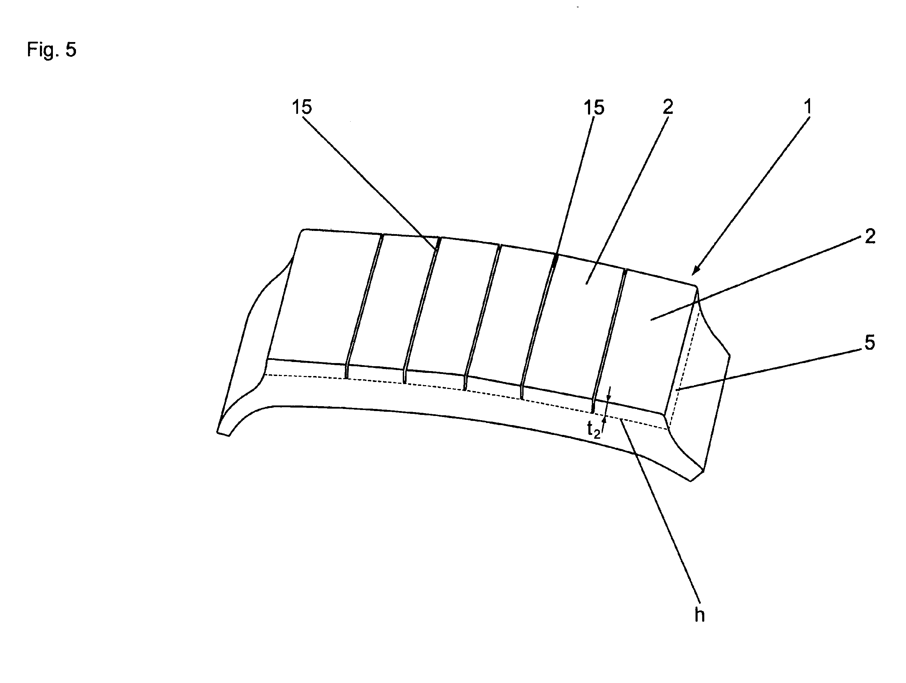

Fig. 5 zeigt eine zweite Ausführungsform eines erfindungsgemäß ausgeführten Laufstreifens 1. Der Laufstreifen 1 ist durch fünf in Umfangsrichtung geradlinig umlaufende schmale Umfangsrillen 15 in sechs Umfangsrippen 2 gegliedert. Die beiden schulterseitig verlaufenden Umfangsrippen 2 sind etwas breiter als die im mittleren Bereich des Laufstreifens 1 verlaufenden vier Umfangsrippen 2, deren Breiten übereinstimmen. Bei der in Fig. 5 gezeigten Ausführung sind sämtliche schmale Umfangsrillen 15 übereinstimmend ausgeführt, eine die radial inneren Enden der Umfangsrillen 15 tangierende Hilfslinie h versinnbildlicht analog zu Fig. 1 eine parallel zur Laufstreifenperipherie umlaufende Einhüllende, die gemeinsam mit schulterseitigen Flankenabschnitten 5 und der Laufstreifenperipherie das Bruttovolumen V umschließt. Auch bei dieser Ausführungsvariante beträgt das Rillenvolumen V_{R} als Summe sämtlicher Volumina der schmalen Umfangsrillen 15 zwischen 1 % und 10%, insbesondere bis zu 7% und vorzugsweise zwischen 1% und 4%, des Bruttovolumens V.

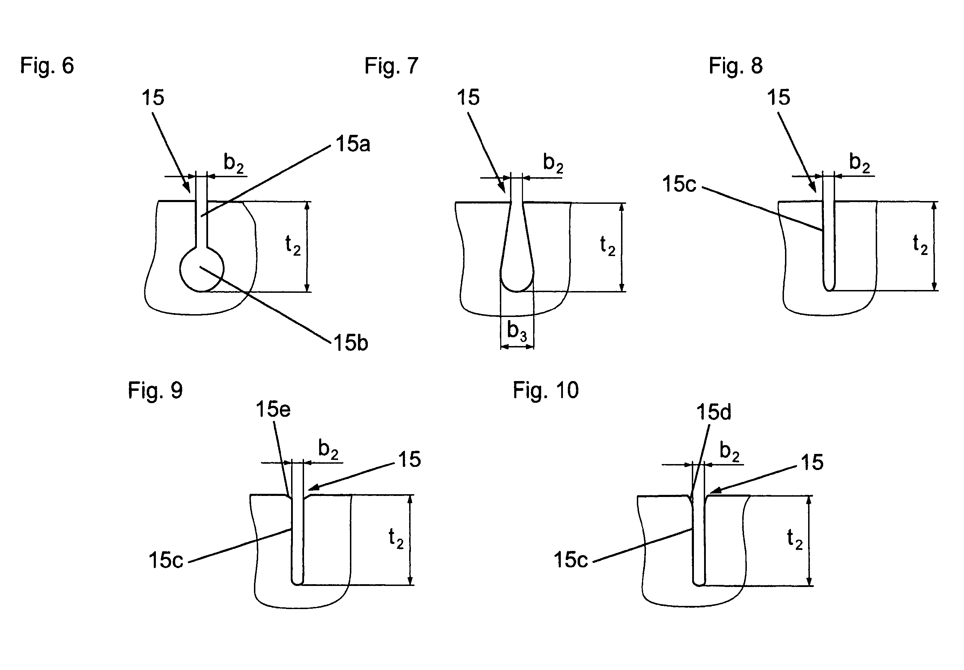

Fig. 6 bis Fig. 9 zeigen bevorzugte Ausführungsvarianten von Querschnittsformen von schmalen Umfangsrillen 15. Bei ein und demselben Reifen wird dabei bevorzugt eine einheitliche Querschnittsform für die Umfangsrillen 15 gewählt, es können jedoch auch Rillen mit verschiedenen Querschnitten kombiniert werden. Bei sämtlichen Ausführungsvarianten beträgt die Tiefe t₂ der schmalen Umfangsrillen 15 zwischen 10 mm und 25 mm, die Breite b₂ der schmalen Umfangsrillen 15 an der Laufstreifenperipherie beträgt zwischen 0,5 mm und 3 mm. Sind die Übergangsbereiche der Rillen 15 zur Laufstreifenperipherie abgeschrägt oder gerundet, wird die Breite b₂ am radial inneren Ende der Schrägen 15c und Rundungen 15d ermittelt und beträgt hier zwischen 0,5 mm und 3 mm.

Fig. 6 zeigt eine Ausführungsform der schmalen Umfangsrille 15 im Querschnitt, welche, ausgehend von der Laufstreifenperipherie und in radialer Richtung betrachtet, zwei Rillenabschnitte 15a und 15b aufweist, wobei der an die Laufstreifenperipherie anschließende Rillenabschnitt 15a über 40% bis 90% der Tiefe t₂ verläuft und ein Abschnitt mit konstanter Breite, der Breite b₂, ist. Der Rillenabschnitt 15a mündet in den Rillenabschnitt 15b, welcher eine etwa kreisförmig ausgeführte Querschnittsfläche aufweist, deren Größe zwischen dem Zweifachen und dem Zehnfachen der Querschnittsfläche des Rillenabschnittes 15a beträgt. Der Rillenabschnitt 15b kann auch eine andere Querschnittsform, beispielsweise eine rechteckige, eine ovale oder annähernd dreieckige Form, aufweisen.

Bei der in Fig. 7 gezeigten Ausführungsvariante weist die schmale Umfangsrille 15 einen Querschnitt in Tropfenform auf, derart, dass sich die Breite der schmalen Umfangsrille 15 in radialer Richtung kontinuierlich vergrößert, wobei die Stelle mit der größten Breite b₃ zwischen 1 mm und 6 mm breit ist.

Fig. 8, 9 und 10 zeigen Ausführungsformen, bei welchen die schmale Umfangsrille 15 von zwei in radialer Richtung und parallel zueinander verlaufenden Rillenflanken 15c begrenzt ist, sodass die Umfangsrille 15 über den Großteil ihrer radialen Erstreckung eine konstante Breite, die Breite b₂, aufweist. Bei der in Fig. 9 gezeigten Ausführungsvariante sind die Übergänge der Rillenflanken 15c zur Laufstreifenperipherie nach außen abgeschrägt (Schrägen 15e), in Fig. 10 mit Rundungen 15d versehen.

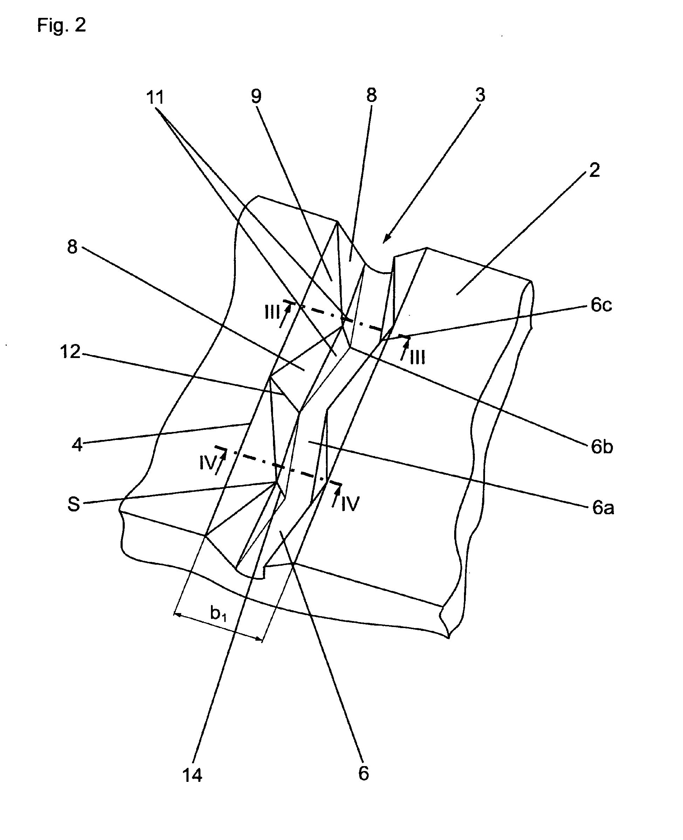

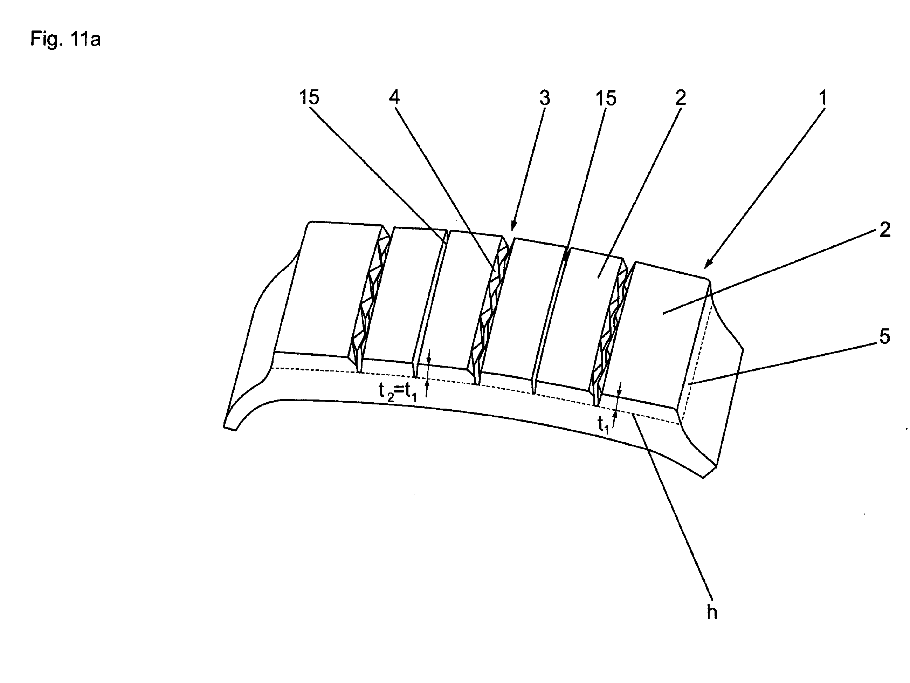

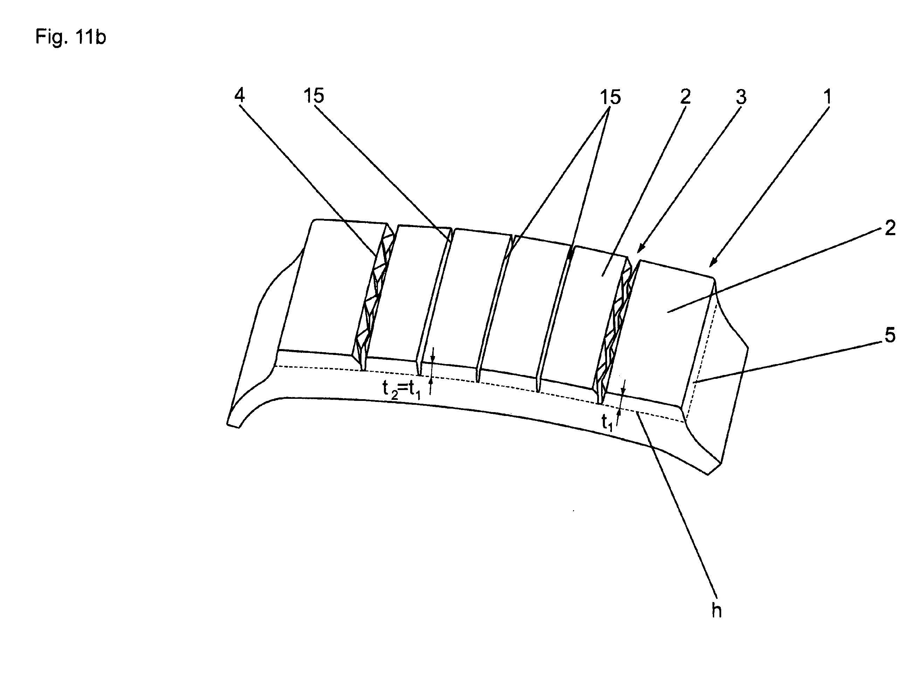

Fig. 11a zeigt eine Ausführungsvariante eines Laufstreifens 1, welcher in Kombination drei breite, gemäß Fig. 2 bis 4 ausgeführte Umfangsrillen 3 und zwei schmale, gemäß Fig. 8 ausgeführte Umfangsrillen 15 aufweist. Auf die schulterseitig verlaufenden Umfangsrippen 2 folgt jeweils eine breite Umfangsrille 3, die dritte breite Umfangsrille 3 verläuft im Zentrum des Laufstreifens entlang des Reifenäquators. Zwischen dieser breiten Umfangsrille 3 und je einer der schulterseitigen Umfangsrillen 3 verlaufen zwei Umfangsrippen 2, welche voneinander jeweils durch eine schmale Umfangsrille 15 getrennt sind. Fig. 11b zeigt eine Variante der Fig. 11a, bei welcher die zentrale Umfangsrille eine schmale Umfangsrille 15 ist. In Fig. 11a und Fig. 11b berührt die jeweils durch die Hilfslinie h versinnbildlichte Einhüllende die radial inneren Enden der in übereinstimmenden Tiefen t₁, t₂, ausgeführten Umfangsrillen 3 und 15. Diese beiden Ausführungsvarianten lassen sich insbesondere derart auslegen, dass das gesamte Rillenvolumen V_{R} knapp unter 7% Bruttovolumens V beträgt.

Erfindungsgemäß ausgeführte Reifen können daher Laufstreifen aufweisen, bei welchen eine Kombination von breiten und schmalen Umfangsrillen 3 und 15 den Laufstreifen 1 in Umfangsrippen 2 gliedert, es können jedoch auch ausschließlich breite Umfangsrillen 3 oder ausschließlich schmale Umfangsrillen 15 im Laufstreifen 1 vorgesehen sein.

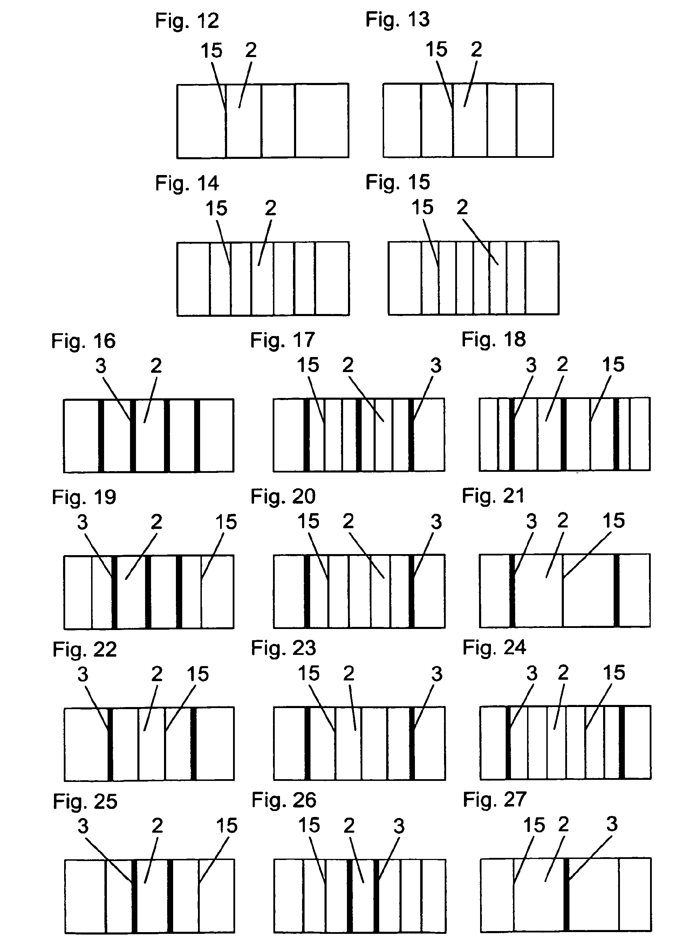

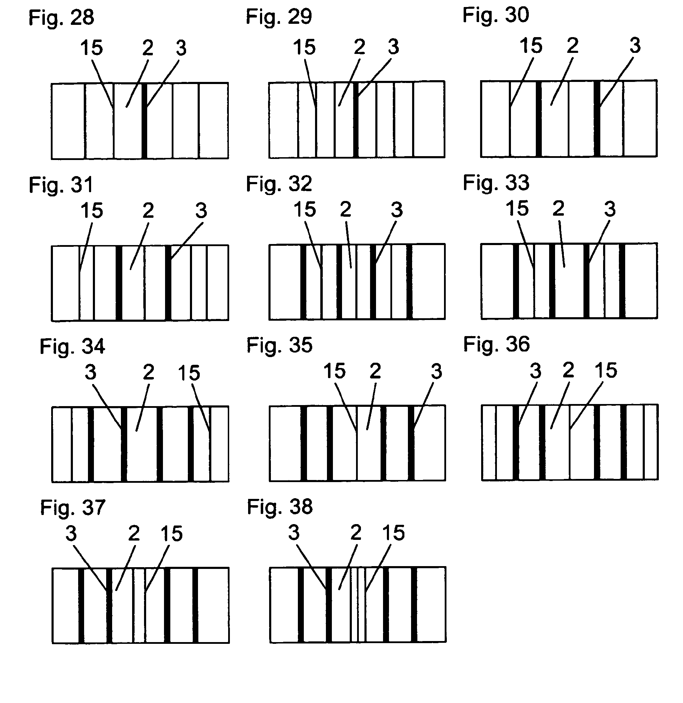

Bei einer Ausführung des Laufstreifens 1 mit schmalen Umfangsrillen 15 kann eine Gliederung des Laufstreifens 1 in Umfangsrippen 2 durch drei bis zu sieben schmale Umfangsrillen 15 erfolgen. Fig. 12 zeigt eine Ausführung mit drei schmalen Umfangsrillen 15, Fig. 13 mit vier, Fig. 14 mit sechs und Fig. 15 mit sieben Umfangsrillen 15. Insbesondere die zwischen den schmalen Umfangsrillen 15 gebildeten Umfangsrippen 2 sind im Wesentlichen gleich breit ausgeführt. Bei Laufstreifen 1, die ausschließlich breite Umfangsrillen 3 aufweisen, sind drei oder vier breite Umfangsrillen 3 optimal. Fig. 16 zeigt eine Ausführung mit vier breiten Umfangsrillen 3. Ausführungen mit Kombinationen von schmalen und breiten Umfangsrillen 3, 15 können sehr unterschiedlich und vielfältig gestaltet sein. Fig. 17 zeigt einen Laufstreifen 1 mit drei breiten Umfangsrillen 3, wobei zwischen den breiten Umfangsrillen 3 jeweils ein Paar von schmalen Umfangsrillen 15 verläuft, Fig. 18 einen Laufstreifen 1 mit drei breiten Umfangsrillen 3 abwechselnd bzw. in Kombination mit vier schmalen Umfangsrillen 15, Fig. 19 eine Ausführung mit drei breiten Umfangsrillen 3 im mittleren Bereich des Laufstreifens 1 und schulterseitig je einer schmalen Umfangsrille 15. Fig. 20 bis Fig. 24 zeigen Varianten mit zwei breiten, schulterseitig verlaufenden Umfangsrillen 3 in Kombination mit einer bis fünf zwischen den breiten Umfangsrillen 3 verlaufenden schmalen Umfangsrille(n) 15, Fig. 25 und Fig. 26 zwei breite Umfangsrillen 3 im mittleren Bereich des Laufstreifens 1 in Kombination mit schulterseitig jeweils einer oder zwei schmalen Umfangsrillen 15, Fig. 27 bis Fig. 29 Varianten mit einer breiten Umfangsrille 3 im Zentrum des Laufstreifens 1 und jeweils zwischen einer und drei schmalen Umfangsrillen 15 seitlich dieser zentralen, breiten Umfangsrille 3, Fig. 30 und Fig. 31 Kombinationen von zwei breiten Umfangsrillen 3 im mittleren Bereich des Laufstreifens 1 mit einer zentralen, schmalen Umfangsrille 15 und ein oder zwei schulterseitig verlaufenden schmalen Umfangsrille(n) 15, Fig. 32 bis Fig. 38 Laufstreifen 1 mit Kombinationen von vier breiten Umfangsrillen 3 mit ein bis drei schmalen Umfangsrillen 15, wobei in Fig. 32 die schmalen Umfangsrillen 15 zwischen den breiten Umfangsrillen 3 verlaufen, in Fig. 33 je eine schmale Umfangsrille 15 zwischen den laufstreifenaußenseitigen Paaren von breiten Umfangsrillen 3 verläuft, in Fig. 34 je eine schmale Umfangsrille 15 die schulterseitig verlaufende Umfangsrille ist, in Fig. 35 eine einzige schmale Umfangsrille 15 im Zentrum des Laufstreifens verläuft, in Fig. 35 eine schmale Umfangsrille 15 im Zentrum des Laufstreifens und je eine weitere schmale Umfangsrille 15 schulterseitig verläuft, in Fig. 37 im Zentrum des Laufstreifens zwei und in Fig. 38 im Zentrum des Laufstreifens drei schmale Umfangsrillen 15, jeweils nebeneinander, verlaufen.

Mit zwei Referenzreifen R₁ und R₂ und einem erfindungsgemäß, in der Ausführung gemäß Fig. 1, ausgeführten Reifen R_{E} werden Tests zur Ermittlung des Rollwiderstandes durchgeführt. Die Reifen R₁ und R₂ wiesen die üblichen, im Querschnitt etwa U-förmigen Umfangsrillen auf. Der Reifen R₂ hatte ein um 7% höheres Abriebsvolumen als der Reifen R₁. Gegenüber dem Reifen R₁ wies der Reifen R₂ einen um etwa 2% größeren Rollwiderstand auf (Tabelle 1).

**Tabelle 1**

| | Referenzreifen R₁ | Referenzreifen R₂ |
|---|---|---|
| Profiltiefe | 15 mm | 16 mm |
| Abriebsvolumen (V - V_{R}) | 100% | 107% |
| V_{R} | 13% | 13% |
| Änderung des Rollwiderstandes | - | + 2,5% (Verschlechterung) |

Tabelle 2 zeigt einen Vergleich des Referenzreifens R₁ mit dem erfindungsgemäß ausgeführten Reifen R_{E}. Beide Reifen hatten eine Profiltiefe von 15 mm, das Rillenvolumen V_{R} des Referenzreifens R₁ betrug 13%, jenes des erfindungsgemäßen Reifens R_{E} 6%. Der Reifen R_{E} wies ein um 7% größeres Abriebsvolumen auf als der Referenzreifen R₁. Der ermittelte Rollwiderstand des Reifens R_{E} war um 2% geringer als jener des Reifens R₁.

**Tabelle 2**

| | Referenzreifen R₁ | Reifen R_{E} |
|---|---|---|
| Profiltiefe | 15 mm | 15 mm |
| V_{R} | 13% | 6% |
| Abriebsvolumen (V - V_{R}) | 100% | 107% |
| Änderung des Rollwiderstandes | - | - 2% (Verbesserung) |

Durch das bei erfindungsgemäß ausgeführten Reifen geringe Rillenvolumen V_{R} ist das im Laufstreifen 1 angebotene Gummivolumen entsprechend höher. Bei einem höheren Gummivolumen ist grundsätzlich eine Verschlechterung des Rollwiderstandes zu erwarten, da beim Durchlaufen des Reifens durch die Bodenaufstandsfläche mehr Gummi deformiert werden muss und somit mehr Energie im Laufstreifen 1 verteilt wird. Bei einem gemäß der Erfindung ausgeführten Reifen ist das Rillenvolumen V_{R} in einem Ausmaß reduziert, dass die Profilsteifigkeit in radialer Richtung deutlich erhöht ist, wodurch die Deformationsamplitude des Laufstreifens 1 deutlich reduziert ist. Dieser Effekt überkompensiert die "erwartbare" Verschlechterung des Rollwiderstandes bei Weitem, sodass der Rollwiderstand insgesamt deutlich sinkt.

Bei erfindungsgemäß ausgeführten Reifen sollte die Breite der beiden schulterseitig gelegenen Umfangsrippen 2 - gemessen an jener Stelle, wo die Schulterrippen ihre geringste Breite aufweisen - jeweils maximal 30% der gesamten Laufstreifenbreite betragen. Eine oder mehrere der vorgesehenen Umfangsrillen 3, 15 können ferner auch in Zickzack- oder Wellenform über den Reifenumfang verlaufen, wobei die durch die Zickzackform entstehenden Abschnitte der Umfangsrillen einen Winkel mit der Umfangsrichtung einschließen sollten, der maximal 60° beträgt. Zusätzlich können in Umfangsrippen in Laufstreifenquerrichtung verlaufende Rillen oder schmale Einschnitte vorgesehen sein, deren "Luftvolumen" in das Rillenvolumen V_{R} einbezogen wird.

Die dargestellten und beschriebenen Ausführungsformen für breite und schmale Umfangsrillen sind bevorzugte Beispiele. Die Umfangsrillen können auch anders gestaltet sein, insbesondere breite Umfangsrillen können abweichend ausgeführte Erhebungen an den Rillenflanken oder Erhebungen beim Rillengrund aufweisen, die das von den Rillen gemeinsam mit einer Einhüllenden an der Laufstreifenperipherie gebildete "Luftvolumen", das Rillenvolumen V_{R}, relativ klein halten.

Die Umfangsrillen können ferner, über den Reifenumfang betrachtet, Abschnitte unterschiedlicher Breite aufweisen. Beispielsweise können schmale Umfangsrillen in regelmäßigen Abständen etwas breiter ausgeführt sein, um mit einem Profiltiefenmesser die Restprofiltiefe leichter bestimmen zu können. Des Weiteren können in einigen oder auch in allen Umfangsrillen sogenannte Abnutzungsindikatoren (Gummistege) oder Nachschneidindikatoren (Vertiefungen) vorhanden sein, welche die maximal erlaubte Nachschneidtiefe anzeigen.

### Bezugszeichenliste

- 1: Laufstreifen
- 2: Umfangsrippe
- 3: breite Umfangsrille
- 4: Randkante
- 5: Flankenabschnitt
- 6: Nutgrund
- 6a: Abschnitt
- 6b: einspringendes Eck
- 6c: vorspringendes Eck
- 7: Erhebung
- 8: Fläche
- 9: Fläche
- 11: Fläche
- 12: Knickkante
- 14: Knickkante
- 15: schmale Umfangsrille
- 15a: Abschnitt
- 15b: Abschnitt
- 15e: Schräge
- 15c: Rillenflanke
- 15d: Rundung
- b₁: Breite
- b₂: Breite
- b₃: Breite
- d: Dicke
- h: Hilfslinie
- t₁: Tiefe
- t₂: Tiefe
- V: Bruttovolumen
- V_{R}: Rillenvolumen
- α₁: Winkel
- α₂: Winkel
- α₃: Winkel

## Patentansprüche

1. Fahrzeugluftreifen für Nutzfahrzeuge mit einem Laufstreifen (1) mit zumindest drei in Umfangsrichtung verlaufenden Umfangsrillen (3, 15), welche den Laufstreifen (1) in Umfangsrippen (2) gliedern, wobei eine parallel zur Laufstreifenperipherie im Laufstreifen (1) verlaufende, die tiefste(n) Umfangsrille(n) von radial innen berührende Einhüllende gemeinsam mit der Laufstreifenperipherie und schulterseitigen Flankenabschnitten (5) ein Laufstreifen-Bruttovolumen (V) definiert und sämtliche Rillen (3, 5) im Laufstreifen (1) ein Rillenvolumen (V_{R}) definieren,
**dadurch gekennzeichnet,**
**dass** das Rillenvolumen (V_{R}) im Laufstreifen (1) zwischen 1 % und 10% des Bruttovolumens (V) beträgt.

2. Fahrzeugluftreifen nach Anspruch 1, **dadurch gekennzeichnet, dass** der Anteil des Rillenvolumens (V_{R}) am Bruttovolumen (V) bis zu 7% beträgt.

3. Fahrzeugluftreifen nach Anspruch 1, **dadurch gekennzeichnet, dass** der Anteil des Rillenvolumens (V_{R}) am Bruttovolumen (V) bis 4% beträgt.

4. Fahrzeugluftreifen nach einem der Ansprüche 1 bis 3, **dadurch gekennzeichnet, dass** der Laufstreifen (1) zumindest eine breite Umfangsrille (3) aufweist, deren Breite (b₁) an der Laufstreifenperipherie zwischen 5 mm und 20 mm und deren Tiefe (t₁) zwischen 10 mm und 25 mm beträgt.

5. Fahrzeugluftreifen nach einem der Ansprüche 1 bis 4, **dadurch gekennzeichnet, dass** der Laufstreifen (1) zumindest eine schmale Umfangsrille (15) aufweist, deren Breite an oder nahe der Laufstreifenperipherie zwischen 0,5 mm und 3 mm und deren Tiefe (t₂) zwischen 10 mm und 25 mm beträgt.

6. Fahrzeugluftreifen nach einem der Ansprüche 1 bis 5, **dadurch gekennzeichnet, dass** der Laufstreifen (1) bis zu sieben Umfangsrillen (3, 15) aufweist.

7. Fahrzeugluftreifen nach einem der Ansprüche 1 bis 6, **dadurch gekennzeichnet, dass** der Laufstreifen (1) als Umfangsrillen ausschließlich schmale Umfangsrillen (15), in einer Anzahl zwischen drei und sieben, aufweist.

8. Fahrzeugluftreifen nach einem der Ansprüche 1 bis 6, **dadurch gekennzeichnet, dass** der Laufstreifen (1) als Umfangsrillen ausschließlich breite Umfangsrillen (3), in einer Anzahl von drei oder vier, aufweist.

9. Fahrzeugluftreifen nach einem der Ansprüche 1 bis 6, **dadurch gekennzeichnet, dass** der Laufstreifen (1) sowohl schmale als auch breite Umfangsrillen (3, 15) aufweist.

10. Fahrzeugluftreifen nach einem der Ansprüche 1 bis 6, 8 oder 9, **dadurch gekennzeichnet, dass** die breite(n) Umfangsrille(n) (3) Rillenflanken aufweist bzw. aufweisen, welche mit vorspringenden Gestaltungselementen, beispielsweise Erhebungen (7), Schrägflächen und dergleichen, versehen sind, die das Rillenvolumen reduzieren.

11. Fahrzeugluftreifen nach einem der Ansprüche 1 bis 6 oder 8 bis 10, **dadurch gekennzeichnet, dass** die breite(n) Umfangsrille(n) (3) an der Laufstreifenperipherie jeweils von zwei parallel zueinander und geradlinig verlaufenden Randkanten (4) begrenzt ist bzw. sind und einen in Umfangsrichtung zickzackförmig verlaufenden Rillengrund (6) aufweisen.

12. Fahrzeugluftreifen nach einem der Ansprüche 1 bis 6 oder 8 bis 11, **dadurch gekennzeichnet, dass** den bezüglich der Randkanten (4) einspringende Ecken (6b) des Rillengrundes (6) jeweils die Spitze (S) einer dreieckigen, zur radialen Richtung geneigten Fläche (9) zugeordnet ist, deren eine Dreiecksseite entlang einer Randkante (4) verläuft, wobei diese Flächen (9) die Erhebungen (7) begrenzen, welche von beiden Rillenflanken in die Umfangsrille (3) ragen.

13. Fahrzeugluftreifen nach einem der Ansprüche 1 bis 6 oder 8 bis 12, **dadurch gekennzeichnet, dass** die Erhebungen (7) pyramidenartig gestaltet sind und die zur radialen Richtung geneigten dreieckigen Flächen (9) jeweils eine Seitenfläche dieser Erhebungen (7) sind, deren Spitzen (S) sich in einem Abstand (a) vom Rillengrund (6) befinden, welcher mindestens 25 % der Tiefe (t₁) beträgt, wobei an die von den Randkanten (4) aus verlaufenden Flächen (9) zwei weitere Pyramidenflächen (8) anschließen, und wobei jeweils zwei dieser Flächen (8) aus benachbarten Erhebungen (7) eine gemeinsame, eine Knickkante (12) bildende Seite besitzen, welche von der Randkante (4) bis zum Rillengrund (6) verläuft.

14. Fahrzeugluftreifen nach einem der Ansprüche 1 bis 7 oder 9, **dadurch gekennzeichnet, dass** die schmale(n) Umfangsrille(n) (15) einen Rillenquerschnitt aufweist bzw. aufweisen, welcher sich von der Laufstreifenperipherie ausgehend in radialer Richtung verbreitert.

15. Fahrzeugluftreifen nach einem der Ansprüche 1 bis 6 oder 9 bis 14, **dadurch gekennzeichnet, dass** der Laufstreifen (1) zwei breite schulterseitig verlaufende Umfangsrillen (3) und eine dritte breite Umfangsrille (3) im zentralen Bereich aufweist, wobei je eine schmale Umfangsrille (15) zwischen den breiten Umfangsrillen (3) verläuft.

16. Fahrzeugluftreifen nach einem der Ansprüche 1 bis 6 oder 9 bis 14, **dadurch gekennzeichnet, dass** der Laufstreifen (1) zwei breite schulterseitig verlaufende Umfangsrillen (3) und zwischen diesen drei schmale Umfangsrillen (15) aufweist.

17. Fahrzeugluftreifen nach einem der Ansprüche 1 bis 16, **dadurch gekennzeichnet, dass** die Umfangsrillen (3, 15) im Laufstreifen (1) übereinstimmende Tiefen (t₁, t₂) aufweisen.

18. Fahrzeugluftreifen nach einem der Ansprüche 1 bis 17, **dadurch gekennzeichnet, dass** die Umfangsrillen (3, 15) im Laufstreifen (1) unterschiedliche Tiefen (t₁, t₂) aufweisen.

19. Fahrzeugluftreifen nach einem der Ansprüche 1 bis 18, **dadurch gekennzeichnet, dass** die Umfangsrippen (2) mit Querrillen, Einschnitten und dergleichen versehen sind.

## Claims

1. Pneumatic vehicle tire for commercial vehicles having a tread (1) with at least three circumferential grooves (3, 15) which run in the circumferential direction and divide the tread (1) into circumferential ribs (2), a gross tread volume (V) being defined by an envelope running in the tread (1) parallel to the periphery of the tread and touching the lowest circumferential groove(s) from the inside radially, together with the periphery of the tread and flank portions (5) at the shoulders, and a groove volume (V_{R}) being defined by all the grooves (3, 5) in the tread (1), **characterized in that** the groove volume (V_{R}) in the tread (1) is between 1% and 10% of the gross volume (V).

2. Pneumatic vehicle tire according to Claim 1, **characterized in that** the proportion of the groove volume (V_{R}) in relation to the gross volume (V) is up to 7%.

3. Pneumatic vehicle tire according to Claim 1, **characterized in that** the proportion of the groove volume (V_{R}) in relation to the gross volume (V) is up to 4%.

4. Pneumatic vehicle tire according to one of Claims 1 to 3, **characterized in that** the tread (1) has at least one wide circumferential groove (3), the width (b₁) of which at the periphery of the tread is between 5 mm and 20 mm and the depth (t₁) of which is between 10 mm and 25 mm.

5. Pneumatic vehicle tire according to one of Claims 1 to 4, **characterized in that** the tread (1) has at least one narrow circumferential groove (15), the width of which at or near the periphery of the tread is between 0.5 mm and 3 mm and the depth (t₂) of which is between 10 mm and 25 mm.

6. Pneumatic vehicle tire according to one of Claims 1 to 5, **characterized in that** the tread (1) has up to seven circumferential grooves (3, 15).

7. Pneumatic vehicle tire according to one of Claims 1 to 6, **characterized in that** the tread (1) has only narrow circumferential grooves (15) as circumferential grooves, of which there are between three and seven.

8. Pneumatic vehicle tire according to one of Claims 1 to 6, **characterized in that** the tread (1) has only wide circumferential grooves (3) as circumferential grooves, of which there are three or four.

9. Pneumatic vehicle tire according to one of Claims 1 to 6, **characterized in that** the tread (1) has both narrow and wide circumferential grooves (3, 15).

10. Pneumatic vehicle tire according to one of Claims 1 to 6, 8 or 9, **characterized in that** the wide circumferential groove(s) (3) has or have groove flanks which are provided with outwardly projecting design elements, for example elevations (7), sloping surfaces and the like, which reduce the groove volume.

11. Pneumatic vehicle tire according to one of Claims 1 to 6 or 8 to 10, **characterized in that** the wide circumferential groove(s) (3) is or are respectively bounded at the periphery of the tread by two peripheral edges (4) running parallel to one another and in a straight line and has or have a groove base (6) running in a zigzag form in the circumferential direction.

12. Pneumatic vehicle tire according to one of Claims 1 to 6 or 8 to 11, **characterized in that** the inwardly projecting corners (6b) of the groove base (6), projecting inward with respect to the peripheral edges (4), are respectively assigned the tip (S) of a triangular area (9), which is inclined in relation to the radial direction and the one side of the triangle of which runs along a peripheral edge (4), these areas (9) bounding the elevations (7), which protrude from both groove flanks into the circumferential groove (3).

13. Pneumatic vehicle tire according to one of Claims 1 to 6 or 8 to 12, **characterized in that** the elevations (7) are pyramidal in design and the triangular areas (9) that are inclined in relation to the radial direction are in each case a side face of these elevations (7), the tips (S) of which are located at a distance (a) from the groove base (6) that is at least 25% of the depth (t₁), two further pyramid faces (8) adjoining the areas (9) running from the peripheral edges (4), and two of these faces (8) from adjacent elevations (7) respectively having a common side, which runs from the peripheral edge (4) to the groove base (6) and forms a line of inflection (12).

14. Pneumatic vehicle tire according to one of Claims 1 to 7 or 9, **characterized in that** the narrow circumferential groove(s) (15) has or have a groove cross section that widens in the radial direction starting from the periphery of the tread.

15. Pneumatic vehicle tire according to one of Claims 1 to 6 or 9 to 14, **characterized in that** the tread (1) has two wide circumferential grooves (3) running at the shoulders and a third wide circumferential groove (3) in the central region, a narrow circumferential groove (15) respectively running between the wide circumferential grooves (3).

16. Pneumatic vehicle tire according to one of Claims 1 to 6 or 9 to 14, **characterized in that** the tread (1) has two wide circumferential grooves (3) running at the shoulders and three narrow circumferential grooves (15) between them.

17. Pneumatic vehicle tire according to one of Claims 1 to 16, **characterized in that** the circumferential grooves (3, 15) in the tread (1) have the same depths (t₁, t₂).

18. Pneumatic vehicle tire according to one of Claims 1 to 17, **characterized in that** the circumferential grooves (3, 15) in the tread (1) have different depths (t₁, t₂).

19. Pneumatic vehicle tire according to one of Claims 1 to 18, **characterized in that** the circumferential ribs (2) are provided with transverse grooves, sipes and the like.

## Revendications

1. Bandage pneumatique pour roue de véhicule utilitaire, le bandage présentant
une bande de roulement (1) dotée d'au moins trois rainures périphériques (3, 15) qui s'étendent dans la direction périphérique et qui divisent la bande de roulement (1) en nervures périphériques (2),
une enveloppe qui s'étend dans la bande de roulement (1) parallèlement à sa périphérie, qui est en contact radialement intérieur avec la ou les rainures périphériques les plus profondes et qui définit un volume brut (V) de bande de roulement avec la périphérie de la bande de roulement et des sections de flancs (5) disposées du côté des épaulements,
l'ensemble des rainures (3, 5) prévues dans la bande de roulement (1) définissant un volume de rainure (V_{R}),
**caractérisé en ce que**
le volume de rainure (V_{R}) de la bande de roulement (1) représente entre 1 % et 10 % du volume brut (V).

2. Bandage pneumatique pour roue de véhicule selon la revendication 1, **caractérisé en ce que** le rapport entre le volume de rainure (V_{R}) et le volume brut (V) peut atteindre 7 %.

3. Bandage pneumatique pour roue de véhicule selon la revendication 1, **caractérisé en ce que** le rapport entre le volume de rainure (V_{R}) et le volume brut (V) peut atteindre 4 %.

4. Bandage pneumatique pour roue de véhicule selon l'une des revendications 1 à 3, **caractérisé en ce que** la bande de roulement (1) présente au moins une large rainure périphérique (3) dont la largeur (b₁) à la périphérie de la bande de roulement vaut entre 5 mm et 20 mm et dont la profondeur (t₁) vaut entre 10 mm et 25 mm.

5. Bandage pneumatique pour roue de véhicule selon l'une des revendications 1 à 4, **caractérisé en ce que** la bande de roulement (1) présente au moins une étroite rainure périphérique (15) dont la largeur à la périphérie ou à proximité de la périphérie de la bande de roulement vaut entre 0,5 mm et 3 mm et dont la profondeur (t₂) vaut entre 10 mm et 25 mm.

6. Bandage pneumatique pour roue de véhicule selon l'une des revendications 1 à 5, **caractérisé en ce que** la bande de roulement (1) présente jusque sept rainures périphériques (3, 15).

7. Bandage pneumatique pour roue de véhicule selon l'une des revendications 1 à 6, **caractérisé en ce que** la bande de roulement (1) présente comme rainures périphériques exclusivement d'étroites rainures périphériques (15) en un nombre compris entre trois et sept.

8. Bandage pneumatique pour roue de véhicule selon l'une des revendications 1 à 6, **caractérisé en ce que** la bande de roulement (1) présente comme rainures périphériques exclusivement de larges rainures périphériques (3) en un nombre de trois ou quatre.

9. Bandage pneumatique pour roue de véhicule selon l'une des revendications 1 à 6, **caractérisé en ce que** la bande de roulement (1) présente à la fois d'étroites et de larges rainures périphériques (3, 15).

10. Bandage pneumatique pour roue de véhicule selon l'une des revendications 1 à 6, 8 ou 9, **caractérisé en ce que** la ou les larges rainures périphériques (3) présentent des flancs de rainure dotés d'éléments en saillie, par exemple des rehaussements (7), des surfaces obliques et similaires qui réduisent le volume de rainures.

11. Bandage pneumatique pour roue de véhicule selon l'une des revendications 1 à 6 ou 8 à 10, **caractérisé en ce que** la ou les larges rainures périphériques (3) prévues à la périphérie de la bande de roulement sont délimitées chacune par deux bordures (4) qui s'étendent parallèlement l'une à l'autre et en ligne droite et présentent un fond de rainure (6) qui s'étend en zigzag dans la direction périphérique.

12. Bandage pneumatique pour roue de véhicule selon l'une des revendications 1 à 6 ou 8 à 11, **caractérisé en ce que** la pointe (S) d'une surface triangulaire (9) inclinée dans la direction radiale est associée aux sommets (6b) du fond de rainure (6) en saillie par rapport aux bordures (4) et dont un côté du triangle s'étend le long d'une bordure (4), cette surface (9) délimitant les rehaussements (7) qui débordent dans la rainure périphérique (3) depuis les deux flancs de rainure.

13. Bandage pneumatique pour roue de véhicule selon l'une des revendications 1 à 6 ou 8 à 12, **caractérisé en ce que** les rehaussements (7) ont une configuration pyramidale et **en ce que** les surfaces triangulaires (9) inclinées dans la direction radiale forment chacune une surface latérale de ces rehaussements (7) dont les pointes (S) sont situées à une distance (a) du fond (6) de la rainure qui correspond à au moins 25 % de la profondeur (t₁), deux autres surfaces pyramidales (8) étant adjacentes aux surfaces (9) qui s'étendent à partir des bordures (4), deux de ces surfaces (8) possédant à partir des rehaussements (7) voisins un côté commun qui forme une arête coudée (12) qui s'étend depuis la bordure (4) jusqu'au fond (6) de la rainure.

14. Bandage pneumatique pour roue de véhicule selon l'une des revendications 1 à 7 ou 9, **caractérisé en ce que** la ou les étroites rainures périphériques (15) présentent une section transversale qui s'évase dans la direction radiale en partant de la périphérie de la bande de roulement.

15. Bandage pneumatique pour roue de véhicule selon l'une des revendications 1 à 6 ou 9 à 14, **caractérisé en ce que** la bande de roulement (1) présente deux larges rainures périphériques (3) qui s'étendent du côté des épaulements et une troisième large rainure périphérique (3) située dans la partie centrale, une étroite rainure périphérique (15) s'étendant entre les deux larges rainures périphériques (3).

16. Bandage pneumatique pour roue de véhicule selon l'une des revendications 1 à 6 ou 9 à 14, **caractérisé en ce que** la bande de roulement (1) présente deux larges rainures périphériques (3) et entre ces dernières trois étroites rainures périphériques (15).

17. Bandage pneumatique pour roue de véhicule selon l'une des revendications 1 à 16, **caractérisé en ce que** les rainures périphériques (3, 15) présentent dans la bande de roulement (1) des profondeurs (t₁, t₂) qui se correspondent.

18. Bandage pneumatique pour roue de véhicule selon l'une des revendications 1 à 17, **caractérisé en ce que** les rainures périphériques (3, 15) présentent dans la bande de roulement (1) des profondeurs (t₁, t₂) différentes.

19. Bandage pneumatique pour roue de véhicule selon l'une des revendications 1 à 18, **caractérisé en ce que** les nervures périphériques (2) sont dotées de rainures transversales, d'entailles et similaires.
